# DEMANDE DE BREVET EUROPEEN

(11) **EP 3 650 268 A1**
(43) Date de publication de la demande: **13.05.2020**
(21) Numéro de dépôt: 19207572.9
(22) Date de dépôt: 07.11.2019
(51) Int. Cl.: B60N 2/66, B60N 2/90

(54) **STRUCTURE DE DOSSIER D'UN SIEGE DE VEHICULE INTEGRANT UNE FONCTION PNEUMATIQUE**

(30) Priorité: 08.11.2018 FR 1860292
(71) Demandeur: RENAULT s.a.s., 92100 Boulogne-Billancourt (FR)
(72) Inventeur: LESUEUR, Gregory, 27720 PREY (FR); MARTIN-CALVO, Fernando, 75005 PARIS (FR)

(57) **Abrégé**

Structure de dossier (1) d'un siège de véhicule comprenant une deux montants latéraux (2, 3) reliés entre eux par un segment inférieur (5). La structure de dossier comprend un plateau support (11) placé dans la partie basse de la structure de dossier (1), de sorte que ledit plateau (11) relie lesdits deux montants latéraux (2, 3) et se superpose au segment inférieur (5), ledit plateau (11) intégrant un système pneumatique (27, 40) apte à déformer ledit plateau (11) de manière à permettre au dossier du siège d'assurer un maintien efficace et confortable du dos d'une personne qui serait assise sur ledit siège.

## Description

L'invention se rapporte à une structure de dossier d'un siège de véhicule intégrant une fonction pneumatique.

Une tendance actuelle en matière de véhicule automobile, est de développer des sièges présentant un bon niveau de confort, pour par exemple permettre à une personne qui serait assise sur l'un de ces sièges de ne pas ou peu ressentir les effets de certains reliefs sur la route, et de pouvoir conduire tranquillement sans contrainte posturale particulière. Parallèlement à ce confort, de tels sièges doivent également répondre à certaines exigences en matière de sécurité, notamment lors de la survenance de chocs accidentels frontaux ou latéraux.

La demande US20180065518 divulgue une structure de dossier d'un siège de véhicule qui s'ajuste grâce à une pompe fluidique.

Une structure de dossier d'un siège de véhicule selon l'invention est conçue pour présenter un bon niveau de confort et de sécurité, tout en étant conçu pour faciliter l'intégration des différents composants permettant d'assurer ce confort et cette sécurité.

L'invention a pour objet une structure de dossier d'un siège de véhicule comprenant une structure de dossier présentant deux montants latéraux reliés entre eux par un segment inférieur.

Selon l'invention, la structure de dossier comprend un plateau support placé dans la partie basse de la structure de dossier, de sorte que ledit plateau relie lesdits deux montants latéraux et se superpose au segment inférieur, le plateau intégrant un système pneumatique apte à déformer ledit plateau, la déformation dudit plateau permettant au dossier du siège d'assurer un maintien efficace et confortable du dos d'une personne qui serait assise sur ledit siège. Un tel plateau support remplace une nappe de suspension traditionnelle. Il est dimensionné de manière à assurer un bon niveau de confort à un occupant qui serait assis sur ledit siège, et un bon niveau de sécurité vis-à-vis dudit occupant lors d'un choc du véhicule contre un obstacle extérieur. Bien que de faible épaisseur, typiquement inférieure à 5mm, le plateau remplace la nappe de suspension habituellement rencontrée dans les véhicules existants, cette perte d'épaisseur étant compensée par de l'ajout de mousse supplémentaire. Avantageusement, le plateau support est reculé de 20mm dans le siège par rapport à la nappe de suspension. Le fait que le plateau soit placé dans la partie basse du dossier signifie que ledit plateau ne recouvre pas entièrement la totalité de la surface de la structure de dossier et se focalise sur le maintien du dos d'un occupant qui serait assis sur ledit siège. Avantageusement, le plateau présente un axe de symétrie s'étendant selon un axe longitudinal et central du dossier. Ce plateau est assimilable à une bande de matière de faible épaisseur, s'étendant selon une direction horizontale dans un plan qui est parallèle à celui du dossier. Puisqu'un tel plateau peut être fabriqué simplement et rapidement, il peut être adapté à une multiplicité de situations, liées à la configuration de la structure du dossier et à la géométrie et aux dimensions du système pneumatique. Préférentiellement, le plateau est une pièce rapportée venant se fixer à la structure de dossier par tout type de moyen, tel que par exemple des vis et/ou des clips. Le système pneumatique peut également servir à faire circuler de l'air dans le siège afin de réguler sa température. Le plateau sert également à améliorer la tenue mécanique du dossier du siège.

De façon avantageuse, deux ailettes sont montées pivotantes aux deux extrémités du plateau reliant les deux montants latéraux, une poche gonflable étant insérée entre chaque ailette et le plateau de sorte qu'un gonflage de chaque poche par le système pneumatique fait pivoter les ailettes vers le centre du siège. Cet arrangement permet aux bords latéraux du siège de migrer vers le centre du siège, par l'intermédiaire de ces ailettes mobiles en rotation, dans le but de créer un bourrelet périphérique, destiné à bien enserrer le corps d'une personne qui serait assise sur ledit siège. En effet, en pivotant, les ailettes vont créer une surépaisseur destinée à stabiliser la position du corps de ladite personne, à l'image d'un siège de véhicule de course dont la géométrie permet un maintien efficace du corps du pilote qui serait assis sur ledit siège.

Avantageusement, la hauteur du plateau est inférieure à la demi-longueur des montants latéraux. La hauteur du plateau constitue sa dimension considérée selon une direction sensiblement parallèle aux deux montants latéraux. De cette manière, le plateau est peu encombrant au sein du siège et a été dimensionné au plus juste pour n'occuper qu'une zone inférieure de la structure de dossier.

De façon préférentielle, le plateau est prolongé par deux plaques support recouvrant chacune au moins partiellement un montant latéral, afin d'assurer un bon maintien desdits montants latéraux de la structure de dossier. De cette manière, le plateau équipé de ses deux plaques support, joue le rôle d'une entretoise de maintien entre les deux montants latéraux de la structure de dossier.

Préférentiellement, une nappe ressort relie les deux montants latéraux en étant placée au-dessus du plateau support, un fil support étant solidarisé au plateau et venant se fixer en au moins deux points de ladite nappe ressort. La nappe ressort sert ainsi de support pour faciliter le dépôt de la mousse sur le dossier, et le plateau est fixé à la structure de dossier par l'intermédiaire de ladite nappe ressort. La nappe ressort sert à la fois à maintenir la mousse du dossier et de point d'ancrage pour le plateau support. Cette nappe ressort assure les points de fixation hauts du plateau.

De façon avantageuse, un fil support secondaire est fixé au plateau, le segment inférieur de la structure de dossier possédant au moins un orifice de manière à permettre audit fil support secondaire de s'insérer dans ledit orifice et de solidariser le plateau au segment inférieur. De cette manière, le plateau est fixé à la structure de dossier par l'intermédiaire du segment inférieur. Ce segment inférieur assure les points de fixation bas du plateau.

Avantageusement, le système pneumatique comprend une pompe qui est insérée entre le plateau et l'un des deux montants latéraux. Le plateau sert de cache et de protection à ladite pompe. La forme du plateau est adaptée aux caractéristiques de la pompe pour pouvoir la recouvrir entièrement et la protéger efficacement. Préférentiellement, la pompe est fixée au plateau.

De façon préférentielle, le système pneumatique comprend un distributeur placé contre l'une des faces du plateau au niveau d'une zone centrale dudit plateau. Le plateau est ainsi multifonctionnel, puisqu'il sert également de support à des éléments variés tels que par exemple le distributeur d'air du système pneumatique.

Préférentiellement, le dossier est réglable en inclinaison au moyen d'un moteur qui est inséré entre l'un desdits montants latéraux et le plateau. Le plateau sert de cache et de protection audit moteur. Préférentiellement le moteur est fixé au plateau.

Avantageusement, le plateau est en matière plastique. Ce matériau est rigide et permet d'assurer une bonne tenue mécanique du siège, tout en demeurant léger.

Une structure de dossier d'un siège de véhicule selon l'invention, présente l'avantage de posséder un caractère d'universalité, car le plateau peut être fabriqué au dernier moment et peut donc revêtir toute sorte de forme, pour pouvoir s'adapter à un type de siège donné, sans avoir à modifier en profondeur la structure dudit siège.

On donne ci-après, une description détaillée d'un mode de réalisation particulier d'une structure de dossier selon l'invention en se référant aux figures suivantes :
- La figure 1 est une vue en perspective du devant d'une structure de dossier d'un siège selon l'invention,
- La figure 2 est une vue en perspective du devant de la structure de dossier de la figure 1 avec une mousse de garnissage,
- La figure 3 est une vue en perspective de derrière de la structure de dossier des figures 1 et 2,
- La figure 4 est une vue de face du devant d'une structure de dossier d'un siège selon l'invention,
- La figure 5 est une vue en perspective de derrière d'une structure de dossier d'un siège selon l'invention, montrant un système pneumatique,
- La figure 6 est une vue en perspective d'une zone latérale d'un plateau support d'une structure de dossier d'un siège selon l'invention,
- La figure 7 est une vue en perspective de la zone latérale du plateau de la figure 6 équipé d'au moins une ailette mobile.

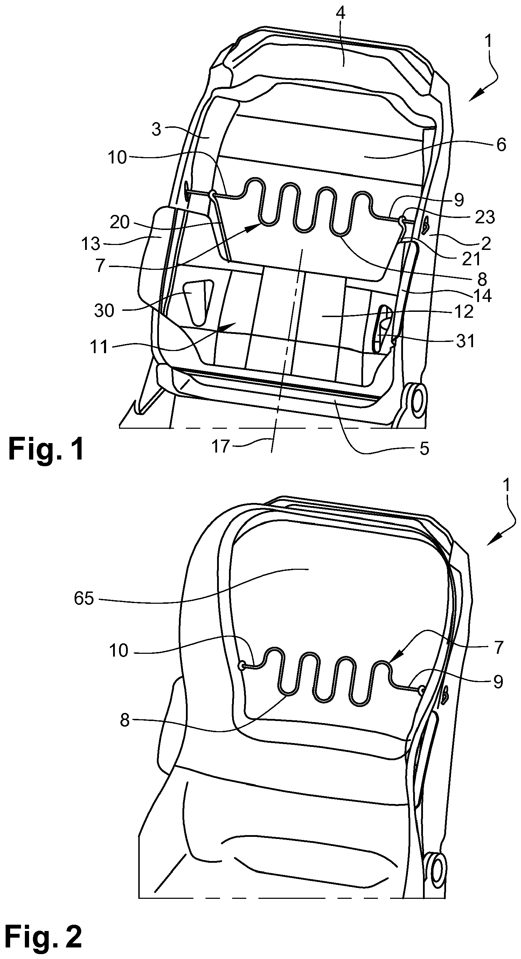

En se référant aux figures 1, 3 et 4 une structure de dossier 1 d'un siège de véhicule selon l'invention, comprend deux montants latéraux 2, 3 un segment supérieur 4 et un segment inférieur 5, lesdits deux montants latéraux 2, 3 étant parallèles et lesdits deux segments 4, 5 étant parallèles. Les deux montants latéraux 2, 3 et les deux segments 4, 5 sont agencés entre eux de façon à définir un cadre de forme sensiblement rectangulaire, les deux montants latéraux 2, 3 ayant une longueur supérieure à celle du segment inférieur 5 et du segment supérieur 4. Un segment de liaison intermédiaire 6, qui est parallèle au segment supérieur 4 et au segment inférieur 5 et qui est inséré entre ceux-ci, relie les deux montants latéraux 2, 3. Ce segment intermédiaire 6 est situé dans la partie haute de la structure de dossier 1, c'est-à-dire dans la moitié supérieure de ladite structure de dossier 1. Une nappe ressort 7 filaire, relie les deux montants latéraux 2, 3 en étant située sous le segment intermédiaire 6 et en étant parallèle à celui-ci. Cette nappe 7 est préférentiellement réalisée en métal, et présente une zone centrale comprenant plusieurs ondulations 8 et deux tronçons d'extrémité 9, 10 dans la parfaite continuité l'un de l'autre. Ces deux tronçons d'extrémité 9, 10 sont rectilignes et sont parallèles aux différents segments 4, 5, 6 de la structure de dossier 1. Les ondulations 9 définissent un secteur de forme sinusoïdale. La nappe ressort 7 traverse les deux montants latéraux 2, 3, et les deux tronçons d'extrémité 9, 10 sont repliés à leur extrémité derrière lesdits deux montants latéraux 2, afin de fixer ladite nappe 7 à la structure de dossier 1.

En se référant aux figures 1, 3, 4 et 6, un plateau 11, préférentiellement réalisé en matière plastique est fixé à la structure de dossier 1 au niveau d'une zone inférieure de ladite structure 1. Ce plateau 11 remplace une nappe de suspension traditionnelle. Il présente un corps central 12 plan s'étendant selon une direction sensiblement horizontale, ledit corps 12 étant prolongé au niveau de ses deux extrémités considérées suivant un axe longitudinal dudit corps 12, par deux plaques support 13, 14. Ces deux plaques 13, 14 sont fixes et font chacune un coude avec ledit corps 12 de manière à créer une avancée par rapport audit corps 12. Plus précisément, ces deux plaques 13, 14 présentent chacune une partie plane qui est sensiblement parallèle au corps 12 du plateau 11. Ces deux plaques 13, 14 s'étendent parallèlement aux deux montants latéraux 2, 3 et présentent une hauteur qui est supérieure à celle du corps central 12.

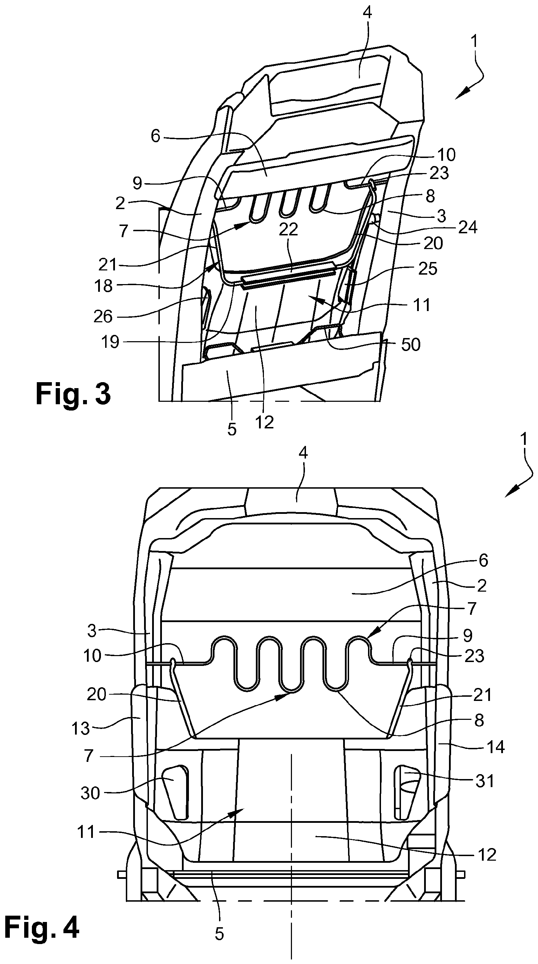

En se référant à la figure 4, le plateau 11 possède un axe de symétrie 17 s'étendant parallèlement aux deux montants latéraux 2, 3 de la structure de dossier 1. Ce plateau 11 est fixé à la structure de dossier 1 de sorte que le corps central 12 recouvre au moins partiellement le segment inférieur 5, et de sorte que les deux plaques 13, 14 recouvrent une partie des deux montants latéraux 2, 3. Au sein de la structure de dossier 1, le corps central 12 se retrouve en retrait par rapport aux deux plaques 13, 14. Ledit plateau 11 est contenu dans la moitié inférieure de la structure de dossier 1.

En se référant à la figure 3, un fil support 18 permet de fixer le plateau à la structure de dossier 1 par l'intermédiaire de la nappe ressort 7. Ce fil 18 présente un segment central 19 prolongé à chacune de ses deux extrémités par un segment latéral 20, 21 replié. Le segment central 19 est inséré à force dans une rainure saillante 22 du plateau 11 et les deux segments latéraux 20, 21 se terminent chacun par un crochet 23 venant s'arrimer à la nappe ressort 7 au niveau des deux tronçons d'extrémité 9, 10. Le fil support 18 est disposé sur la structure de dossier 1 de sorte que le segment central 19 s'étende horizontalement et constitue la partie la plus basse dudit fil support 18, les deux crochets 23 constituant les parties les plus hautes dudit fil support 18.

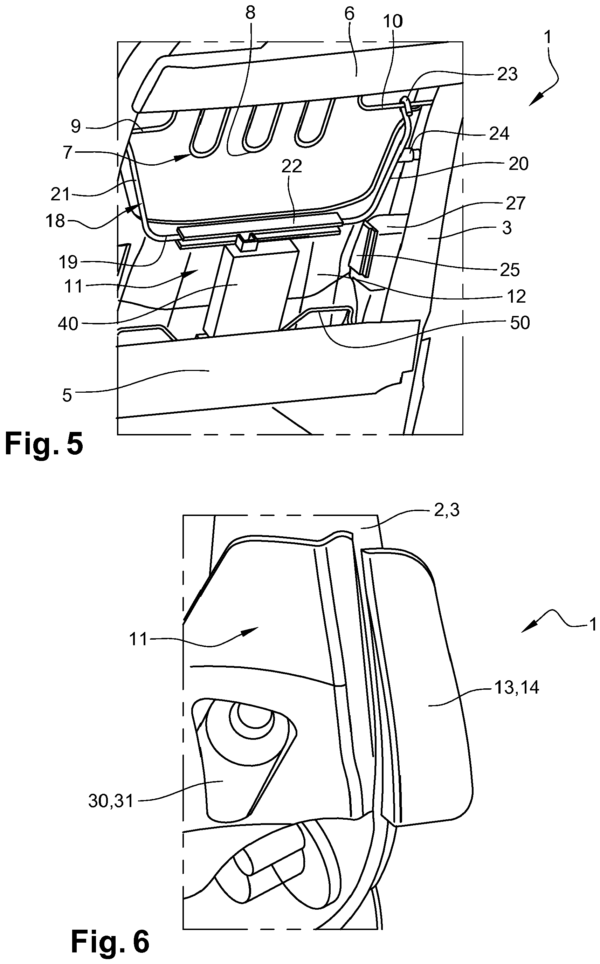

En se référant aux figures 3 et 5, un fil support secondaire 50 qui a été préalablement solidarisé au plateau 11, permet de fixer ledit plateau 11 au segment inférieur 5 de la structure de dossier 1. Des pions de fixation 24 émergeant latéralement des plaques support 13, 14 du plateau 11, permettent de renforcer la fixation du plateau 11 dans la structure de dossier 1, en venant chacun s'insérer dans un orifice d'un montant latéral 2, 3. Le plateau comporte deux ouvertures 30, 31 et deux pattes émergeantes 25, 26 pour permettre d'assurer un bon garnissage de la structure de dossier 1.

En se référant aux figures 4 et 5, le plateau 11 sert de support à un système pneumatique comprenant une pompe 27 apte à fournir de l'air et un distributeur 40 apte à diffuser cet air dans des directions prédéfinies du siège. La forme générale du plateau 11 doit tenir compte de l'intégration de ce système pneumatique. Le plateau 11 enveloppe ladite pompe 27 et ledit distributeur 40, et selon un mode de réalisation particulier de l'invention, ladite pompe 27 et ledit distributeur 40 sont arrimés au plateau support 11.

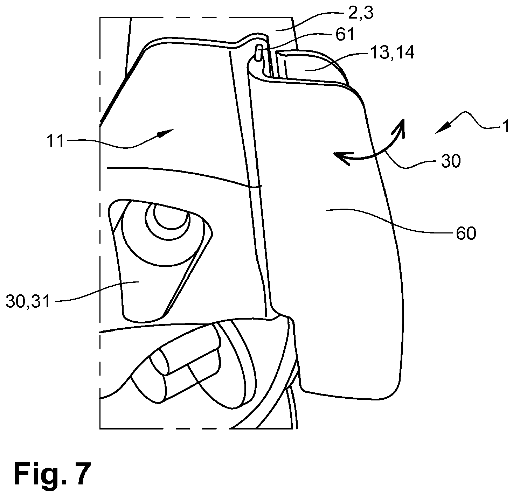

En se référant à la figure 7, une ailette 60 est montée pivotante au niveau de chaque extrémité du plateau 11 où est déjà fixée une plaque support 13, 14. Cette ailette 60 peut pivoter autour d'un axe de rotation 61 solidarisé au plateau 11 dans le sens indiqué par la flèche 30. Une plaque support 13, 14 et une ailette 60 délimitent un espace de dimension variable, en fonction de la position de l'ailette 60 autour de son axe de rotation 61. Une poche reliée au système pneumatique est placée dans l'espace délimité par la plaque support 13, 14 et l'ailette 60. Un gonflage de ladite poche entraine une augmentation de volume de ladite poche, provoquant une rotation de l'ailette 60 autour de son axe de rotation 61. Puisque le plateau 11, les plaques support 13, 14 et les ailettes 60 sont enfouis dans un garnissage pouvant par exemple être de la mousse, le pivotement de chaque ailette 60 va entrainer la création d'un bourrelet sur le siège, de part et d'autre du dos d'une personne qui serait assise sur ledit siège, afin d'assurer de façon étroite et stable le maintien du dos de ladite personne contre le siège. Un tel siège adopte alors une configuration sportive, analogue à celle pouvant être rencontrée dans les sièges de voitures de course.

## Revendications

1. Structure de dossier (1) d'un siège de véhicule comprenant deux montants latéraux (2, 3) reliés entre eux par un segment inférieur (5), **caractérisé en ce qu'**il comprend un plateau support (11) placé dans la partie basse de la structure de dossier (1), de sorte que ledit plateau (11) relie lesdits deux montants latéraux (2, 3) et se superpose au segment inférieur (5), et **en ce que** le plateau (11) intègre un système pneumatique (27, 40) apte à déformer ledit plateau (11), la déformation dudit plateau (11) permettant au dossier du siège d'assurer un maintien efficace et confortable du dos d'une personne qui serait assise sur ledit siège.

2. Structure de dossier selon la revendication 1, **caractérisé en ce que** deux ailettes (60) sont montées pivotantes aux deux extrémités du plateau (11) reliant les deux montants latéraux (2, 3), et **en ce qu'**une poche gonflable est insérée entre chaque ailette (60) et le plateau (11) de sorte qu'un gonflage de chaque poche par le système pneumatique fait pivoter les ailettes (60) vers le centre du siège.

3. Structure de dossier selon l'une quelconque des revendications 1 ou 2, **caractérisé en ce que** la hauteur du plateau (11) est inférieure à la demi-longueur des montants latéraux (2, 3).

4. Structure de dossier selon l'une quelconque des revendications 1 à 3, **caractérisé en ce que** le plateau (11) est prolongé par deux plaques support (13, 14) recouvrant chacune au moins partiellement un montant (2, 3) afin d'assurer un bon maintien desdits montants latéraux (2, 3) de la structure de dossier (1).

5. Structure de dossier selon l'une quelconque des revendications 1 à 4, **caractérisé en ce qu'**une nappe ressort (7) relie les deux montants latéraux (2, 3) en étant placée au-dessus du plateau support (11), et **en ce qu'**un fil support (18) est solidarisé au plateau (11) et vient se fixer en au moins deux points (23) de ladite nappe ressort (7).

6. Structure de dossier selon l'une quelconque des revendications 1 à 5, **caractérisé en ce qu'**un fil support secondaire (50) est fixé au plateau (11), et **en ce que** le segment inférieur (5) de la structure de dossier (1) possède au moins un orifice, de manière à permettre audit fil support secondaire (50) de s'insérer dans ledit orifice et de solidariser le plateau (11) au segment inférieur (5).

7. Structure de dossier selon l'une quelconque des revendications 1 à 6, **caractérisé en ce que** le système pneumatique comprend une pompe (27) qui est insérée entre le plateau (11) et l'un des deux montants latéraux (2, 3).

8. Structure de dossier selon l'une quelconque des revendications 1 à 7, **caractérisé en ce que** le système pneumatique comprend un distributeur (40) placé contre l'une des faces du plateau (11) au niveau d'une zone centrale dudit plateau (11).

9. Structure de dossier selon l'une quelconque des revendications 1 à 8, **caractérisé en ce que** le dossier (1) est réglable en inclinaison au moyen d'un moteur (70) qui est inséré entre l'un desdits montants latéraux (2, 3) et le plateau (11).

10. Structure de dossier selon l'une quelconque des revendications 1 à 9, **caractérisé en ce que** le plateau (11) est en matière plastique.
